# EUROPEAN PATENT SPECIFICATION

(11) **EP 0 419 470 B1**
(45) Date of publication and mention of the grant of the patent: **10.02.1993**
(21) Application number: 88909637.6
(22) Date of filing: 28.10.1988
(51) Int. Cl.: F16L 55/16

(54) **TUBE FOR LINING OF PRESSURE WATER PIPES**
ROHR ZUR INNENBESCHICHTUNG VON UNTER DRUCK STEHENDEN WASSERLEITUNGEN
TUBE DESTINE AU CHEMISAGE DE CANALISATIONS D'EAU SOUS PRESSION

(30) Priority: 29.10.1987 SE 8704210
(43) Date of publication of application: 03.04.1991
(73) Proprietor: UPONOR N.V., Philipsburg Sint Maarten (AN)
(72) Inventor: JOHANSSON, Thomas, S-438 00 Landvetter (SE); JÄRVENKYLÄ, Jyri, SF-15870 Hollola (FI)
(74) Representative: Ström, Tore
(86) International application number: SE8800579
(87) International publication number: WO8903957

(56) References cited:
- EP-A- 213 674
- WO-A-87/05376
- WO-A-87/05677
- CA-A- 1 034 882
- FI-C- 71 402
- SE-B- 448 772
- US-A- 2 622 623
- US-A- 4 690 174

## Description

The invention relates to a pipe for pressure water pipelines and more particularly to a relining pipe which shall be drawn into the pipeline to be restored. This type of relining is termed slip-lining.

In pressure water pipelines which often comprise cast-iron or nodular-iron pipes or steel pipes deposits eventually build up on the inner side of the pipe wall, which necessitate repeated cleaning of the pressure water pipeline. However, by such cleaning the material of the iron pipes will be uncovered, which in turn causes increased corrosion so that the pipe wall after repeated cleaning will be thinner and thinner and finally will not satisfy the established requirements as to the strength. The reduction of the strength of the pipe caused by corrosion can give rise to damages such as perforation of the pipe wall. Damages can also arise due to shocks. In those cases wherein a reduction of the dimension of the pressure water pipeline can be accepted, the pipeline can be restored by drawing a relining pipe thereinto. The pipes which are used today in restoring pipelines in this manner consist of smooth polyethylene or polypropylene pipes which are drawn into the pressure water pipeline either as a major continuous length of pipe which is wound up to form a coil, or as lengths of about 12 m which are interconnected by butt welding in the field. When the pipe is introduced into the pressure water pipeline from the ground level the pipe often will be tightly bent, e.g. at the transition from a vertical well to a horizontal pipeline and in bends in the pipeline. In order that the relining pipe can be drawn into the pipeline from the ground level through a shaft the pipe accordingly must have some flexibility in the longitudinal direction thereof, which is of course also required in order that the relining pipe can follow existing bends or irregularities in the pipeline. At the same time it is required that the pipe has a strength which is so great that the pipe resists the positive and negative pressures which can appear in the pipelines. These two requirements are in conflict with each other and therefore it is not unusual that a pipe which is sufficiently flexible will be deformed during the relining or at great negative pressures. Moreover, the relining pipe must have an outside diameter which is sufficiently smaller than the inside diameter of the pipeline in order that the pipe can slide unobstructedly through the pipeline when it is drawn thereinto. Due to the gap between the relining pipe and the pipeline there will be obtained, however, a movement of the relining pipe at existing pressure shocks in the relined pressure water pipeline, which can result in damages on the relining pipe at existing irregularities or sharp edges in the pipeline so that the relining pipe eventually will break due to such mechanical damages. The movement of the relining pipe as such can be eliminated by injecting between the relining pipe and the pipeline a setting filler, but this measure makes the relining substantially more expensive and, therefore, it is desired to avoid such measure. The joints between the pipe lengths provided by mirror welding or induction welding moreover provide risk zones because they can be of poor quality, which cannot be detected by external visual inspection, and because there is obtained at the joints a bead on the outside of the relining pipe, which can engage with the pipes of the pipeline when the relining pipe is drawn thereinto.

The purpose of the invention is to provide a pipe which is more suitable for sliplining than the smooth polyethylene or polypropylene pipe and eliminates the drawbacks accounted for above, and which at the same time is flexible in the longitudinal direction thereof and is stiff in the radial direction and can easily be secured in position in the pipeline. The pipe according to the invention is a pipe of thermoplastic material for pressure water pipelines, having radially projecting fins on the outside surface of the pipe wall disclosed in WO-A-05677 and having obtained the characterizing features of claim 1.

Due to the fact that the relining pipe comprises a finned pipe having the properties mentioned above it is possible to successfully use the pipe as a relining pipe. Owing to the fins the pipe wall can be made thinner than in smooth pipes, which improves the flexibility of the pipe, and at the same time the fins reduce the risk of deformation in the direction of the pipe radius. The relationships between the strengths of the pipe wall and the fins make possible that the finned pipe is used as a relining pipe because said relationships guarantee that the fins and not the pipe wall yield when the fins encounter a resistance in the pressure water pipeline.

The lower shear strength of the fins can be obtained in a simple manner by making the fins of a softer material than the pipe wall. As an alternative the total volume of the fins is at the most half the volume of the pipe wall, and the height of the fins is at least double the size of the average width of the fins.

In order to facilitate the introduction of a finned pipe into the pipeline it may be advantageous that the fin or fins extend helically around the pipe, the rotation of the pipe as a consequence thereof can facilitate the insertion of the pipe into the pipeline.

An advantageous embodiment of the pipe of the invention is characterized in that the pipe is provided with alternating higher thinner fins and lower thicker fins.

In a pipe thus finned the fins stiffen the pipe wall so that this wall between the fins can have a smaller wall thickness than the smooth pipe, which in turn means that the pipe will be more flexible in the longitudinal direction thereof. The higher fins stabilize and center the relining pipe in the pipeline, the pipe as a consequence thereof will be prevented from movement under the influence of pressure shocks. At the same time a better and safer joint can be provided between the pipe lengths at the low fins where the joint moreover is protected between adjacent higher fins and is prevented from engaging the pipeline pipes when the relining pipe is drawn into the pressure water pipeline.

The pipe of the invention will be described in more detail below reference being made to the accompanying drawings wherein
Figure 1 discloses a first embodiment of the pipe of the invention in a longitudinal cross-sectional view,
Figure 2 discloses a second embodiment in longitudinal cross-sectional view,
Figure 3 is a longitudinal cross-sectional view of a mirror welded joint between two pipe lengths,
Figure 4 is a longitudinal cross-sectional view of a joint obtained by induction welding,
Figure 5 discloses a joint obtained by resistance welding and
Figure 6 discloses a mechanical joint between pipe lengths.

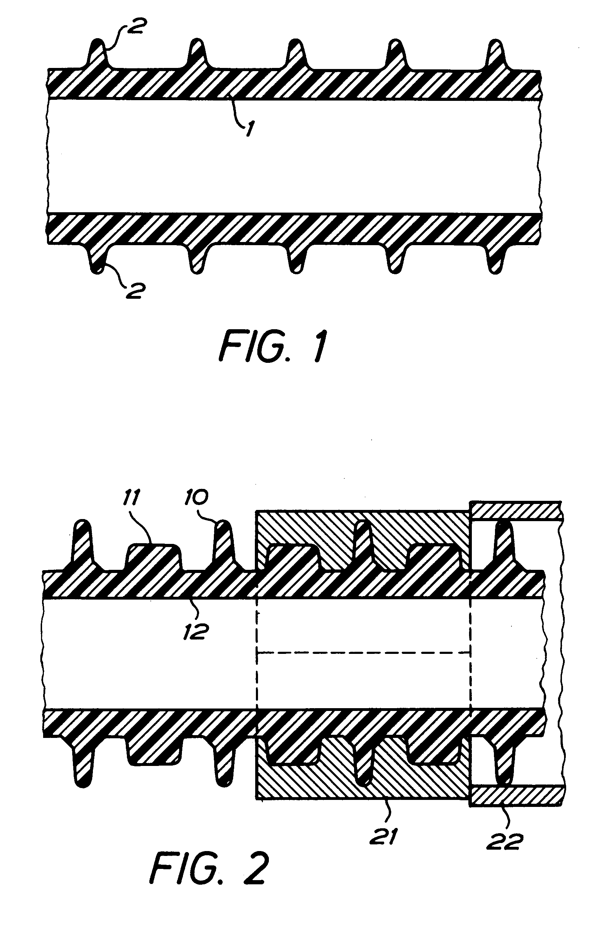

Figure 1 discloses a pipe of the present invention. The pipe is made of thermoplastics, e.g. polyethylene or polypropylene. The pipe wall is indicated at 1 and the fins at 2. The pipe wall and the fins are dimensioned in relation to each other such that the tensile strength or compression strength of the pipe wall is greater than the shear strength of the fins 2. Preferably, the fins 2 are made of a softer material than the pipe wall. From the figure it can also be seen that the total volume of the fins 2 per unit length of the pipe is at the most half the volume of the pipe wall, and that the height of the fins is at least double the size of the average width of the fins. The fins shown in Figure 1 encircle the pipe wall in the peripheral direction but the fins can also extend helically around the pipe.

According to Figure 2 the relining pipe of the invention is constructed as a finned pipe having alternating higher thinner fins 10 and lower thicker fins 11, the higher and lower fins alternating with each other in such manner that there is provided between each two adjacent fins of one kind a fin of the other kind. The pipe should be made of thermoplastics, and a suitable material is polyethylene, but also polypropylene can be used. The higher thinner fins preferably are dimensioned such that they are elastically flexible to some extent. The fins stiffen the pipe wall 12 so that this can be given a smaller thickness than in a corresponding smooth pipe for the same external pressure. Due to the fact that the wall thickness is smaller the pipe will also be more easily flexed, the introduction of the pipe in the pipeline to be relined being facilitated as a consequence thereof. Owing to the flexibility of the higher thinner fins these fins can yield at the introduction. These fins guide the pipe when it slides through the pipeline and serve to stabilize the inserted pipe and to keep it centered in the pipeline.

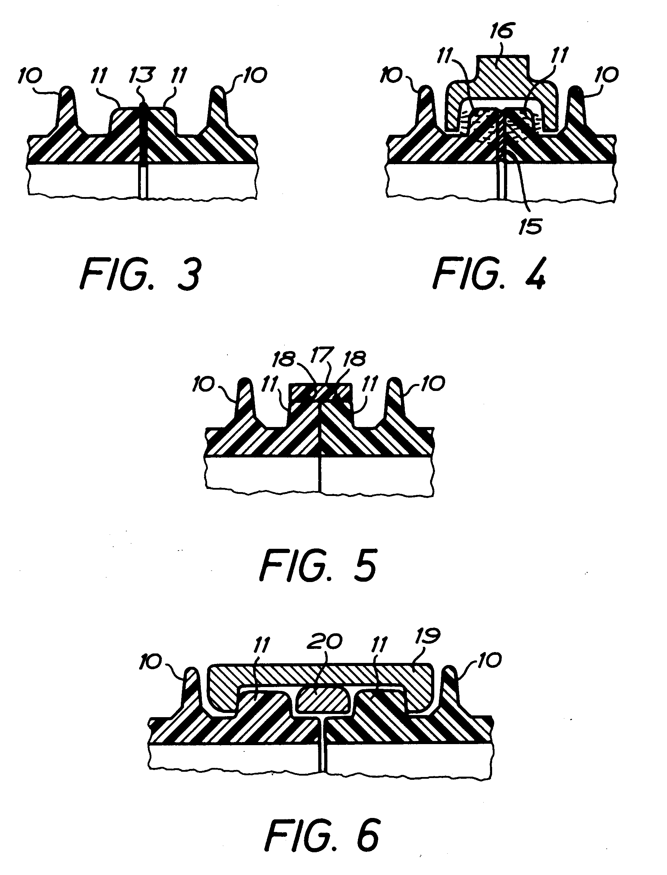

At the lower thicker fins 11 lengths of the pipe of the invention can be joined in different manners, and the most important ones thereof are disclosed in Figures 3 to 6. In Figure 3 there is shown a butt joint 13 obtained by mirror welding after the two joint pipe ends having been cut substantially centrally through a terminating lower thicker fin 11. It will be seen that the joint is well protected between the adjacent higher thinner fins 10, which is an advantage particularly when the pipe is drawn into the pipeline to be relined, because the joint which may have a bead or other irregularity on the outside of the pipe will be prevented from engaging existing irregularities in the pipeline at this bead or irregularity.

A similar joint as that in Figure 3 can be obtained by induction welding in the manner disclosed in Figure 4 wherein a metal ring 15 is provided between the end surfaces of the pipes to be interconnected and this ring is heated by generating eddy currents therein by means of a magnetic field generator 16 the two pipe ends being fused to opposite sides of the ring.

The joint in Figure 5 has been obtained by resistance welding. A ring 17 of the same material as that of the pipe is welded to the lower thicker fins 11 abutting each other, by fusing the plastic material by means of electric heating wires 18 located between the ring and the fins.

Finally, a purely mechanical connection is disclosed in Figure 6, wherein the two pipe ends are kept together by means of an external metal ring 19 which engages at hook-shaped edge portions the two adjacent lower thicker fins 11 between which there is provided a sealing ring 20.

In order that the relining pipe will not move at the position thereof in the pipeline, e.g. at existing pressure shocks, it should be anchored so that it cannot move axially. At smooth relining pipes this is achieved by means of a clamp shackle consisting of two halves which are clamped around the relining pipe by means of screw connections and are fixedly anchored in a suitable way. The clamp shackle is kept in position on the relining pipe solely by friction, which means that it may be necessary to clamp the shackle so tightly around the relining pipe that this pipe will be deformed, and that the relining pipe may be exposed to wear at existing movement between the relining pipe and the shackle.

The invention allows this force engagement between the relining pipe and the shackle to be replaced by a positive engagement. In Figure 2 there is shown a shackle 21 which in a conventional manner comprises two halves which are clamped by means of screw connections around the relining pipe and which on the inside thereof are profiled to receive the fins 10 and 11 in corresponding annular grooves. It is not necessary to clamp this shackle so tightly around the relining pipe that this will be deformed because the engagement between the relining pipe and the shackle is a positive engagement and is not depending on the abutting pressure against the relining pipe. The shackle can keep the relining pipe in position by engaging the end edge of a pipeline 22 wherein the relining pipe has been inserted, as is shown in Figure 2, or can be anchored in an existing valve or pipe bend or in stationary anchoring means in the ground.

## Claims

1. Pipe of thermoplastic material for pressure water pipelines, having radially projecting fins (2, 10, 11) on the outside surface of the pipe wall (1, 12), characterized in that the pipe wall including said fins is formed integrally as a tubular element with the tensile strength of the pipe wall (1, 12) being greater than the shear strength of the fins (2, 10, 11).

2. Pipe as in claim 1 wherein the fins (2, 10, 11) are made of a softer material than the pipe wall (1, 12).

3. Pipe as in claim 1 wherein the total volume of the fins (2) is at the most half the volume of the pipe wall (1) and wherein the height of the fins is at least double the size of the average width of the fins.

4. Pipe as in claim 1 wherein the fin or fins extend helically around the pipe.

5. Pipe as in claim 1 wherein the pipe is provided with alternating higher thinner fins (10) and lower thicker fins (11).

6. Pipe as in claim 5 wherein each fin of one type is located between two fins of the other type.

7. Pipe as in claim 5 or 6 wherein the higher thinner fins (10) are made elastically flexible.

8. Pipe as in claim 5 wherein an encircling anchoring shackle (21) is provided on the pipe in positive engagement with the fins (10, 11).

## Patentansprüche

1. Rohr aus thermoplastischem Kunststoffmaterial für Druckwasserleitungen mit radial hervorstehenden Stegen (2,10,11) an der Außenseite der Rohrwandung (1,12), dadurch gekennzeichnet, daß die Rohrwandung einschließlich der Stege einheitlich als röhrenförmiges Bauteil geformt ist und die Zugfestigkeit der Röhrenwandung (1,12) größer ist als die Scherfestigkeit der Stege (2,10,11).

2. Rohr nach Anspruch 1, wobei die Stege (2,10,11) aus einem weicheren Material bestehen als die Rohrwandung (1,12).

3. Rohr nach Anspruch 1, wobei das Gesamtvolumen der Stege (2) höchstens die Hälfte des Volumens der Rohrwandung (1) beträgt und die Höhe der Stege mindestens das Doppelte der mittleren Breite der Stege beträgt.

4. Rohr nach Anspruch 1, wobei der Steg oder die Stege schraubenlinienförmig um das Rohr verlaufen.

5. Rohr nach Anspruch 1, wobei das Rohr abwechselnd höhere, dünnere Stege (10) und niedrigere, dickere Stege (11) aufweist.

6. Rohr nach Anspruch 5, wobei jeder Steg der einen Art sich zwischen zwei Stegen der anderen Art befindet.

7. Rohr nach einem der Ansprüche 5 oder 6, wobei die höheren, dünneren Stege (10) elastisch flexibel gefertigt sind.

8. Rohr nach Anspruch 5 mit einem das Rohr umgebenden Befestigungsbügel (21) in formschlüssiger Verbindung mit den Stegen (10,11).

## Revendications

1. Tube en matériau thermosynthétique pour des canalisations d'eau sous pression, présentant des nervures saillant radialement (2, 10, 11) sur la surface extérieure de la paroi de tube (1, 12), caractérisé en ce que la paroi de tube comportant lesdites nervures est réalisée d'un seul tenant, sous forme d'élément tubulaire, la résistance à ta traction de la paroi de tube (1, 12) étant supérieure à la résistance au cisaillement des nervures (2, 10, 11).

2. Tube selon la revendication 1, dans lequel tes nervures (2, 10, 11) sont réalisées en un matériau plus souple que celui de ta paroi de tube (1, 12).

3. Tube selon la revendication 1, dans lequel le volume total des nervures (2) constitue au maximum la moitié du volume de la paroi de tube (1), et dans lequel la hauteur des nervures vaut au moins le double de la valeur de la largeur moyenne des nervures.

4. Tube selon la revendication 1, dans lequel la ou les nervures s'étendent de manière hélicoïdale autour du tube.

5. Tube selon la revendication 1, dans lequel le tube est pourvu d'une alternance de nervures (10) plus hautes et plus minces, et de nervures (11) plus basses et plus épaisses.

6. Tube selon la revendication 5, dans lequel chaque nervure d'un type est située entre deux nervures de l'autre type.

7. Tube selon la revendication 5 ou 6, dans lequel les nervures (10) plus hautes et plus minces sont réalisées de manière flexible élastiquement.

8. Tube selon la revendication 5, dans lequel un collier d'ancrage (21) est prévu sur te tube de manière à l'entourer, en contact positif avec les nervures (10, 11).
